(19) Europäisches Patentamt
European Patent Office
Office européen des brevets

(11) **EP 2 520 825 A1**

(12) **DEMANDE DE BREVET EUROPEEN**

(43) Date de publication:
**07.11.2012 Bulletin 2012/45**

(51) Int Cl.:
*F16F 15/00* *(2006.01)*

(21) Numéro de dépôt: **12164609.5**

(22) Date de dépôt: **18.04.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.05.2011 FR 1153865**

(71) Demandeur: **L'AIR LIQUIDE, SOCIETE ANONYME POUR L'ETUDE ET L'EXPLOITATION DES PROCEDES GEORGES CLAUDE 75007 Paris (FR)**

(72) Inventeurs:
• **Aigouy, Gérald 73110 La Croix de la Rochette (FR)**

• **Debray, Benoît 38360 Sassenage (FR)**
• **Rey, Jean-Christophe 38690 Le Grand Lemps (FR)**

(74) Mandataire: **De Cuenca, Emmanuel Jaime L'Air Liquide S.A. Direction Propriété Intellectuelle 75 Quai d'Orsay 75321 Paris Cedex 07 (FR)**

Remarques:
Revendications modifiées conformément à la règle 137(2) CBE.

(54) **Dispositif et procédé pour amortir des efforts parasites dans un moteur électrodynamique linéaire et moteur électrodynamique linéaire comprenant un tel dispositif**

(57)   Ce dispositif (10) comprend :
- des vis d'interface (11, 12), fixées au moteur (1) et à une embase (5) ;
- des organes de mesure (21, 22) pour mesurer des efforts parasites pour générer des premiers signaux ;
- des actionneurs (31) agencés pour transmettre, à chaque vis d'interface (11, 12), un effort de sens opposé à l'effort parasite ;
- une unité de commande adaptée pour recevoir les premiers signaux et pour émettre les deuxièmes signaux à destination des actionneurs (31) de sorte que chaque actionneur (31) génère un effort.

**EP 2 520 825 A1**

**Description**

La présente invention concerne un dispositif pour amortir ou supprimer des efforts parasites, tels que des efforts produits par des vibrations ou des chocs. De plus, la présente invention concerne un moteur de type électrodynamique linéaire comprenant un tel dispositif. Par ailleurs, la présente invention concerne un procédé pour amortir ou supprimer des efforts parasites.

La présente invention trouve notamment application dans le domaine des machines cryogéniques à cycle alterné, machines Stirling ou tubes à gaz pulsé, mettant en oeuvre des moteurs électrodynamiques linéaires à pistons, en particulier les machines cryogéniques destinées à être embarquées dans des engins spatiaux tels que les satellites d'observation de la Terre. Dans cette application, un moteur électrodynamique linéaire est utilisé comme compresseur pour comprimer un fluide tel que l'hélium, dont la détente réalise un refroidissement.

Un moteur électrodynamique linéaire de l'art antérieur comprend généralement deux bobines d'induction mobiles en translation et deux pistons liés respectivement aux deux bobines d'induction. Chaque piston est monté sur un palier qui développe une force de rappel élastique axiale proportionnelle au déplacement du piston. Sous l'effet de forces magnétiques cycliques, les bobines d'induction animent les pistons d'un mouvement linéaire alternatif. Les pistons forment des masses mobiles en translation, ce qui permet de comprimer le fluide.

Dans le but de maximiser l'amplitude du déplacement de chaque piston, donc la compression du fluide, le moteur est piloté de sorte que les pistons travaillent à ou près de leur fréquence de résonance mécanique. De plus, dans ce même but, le moteur est conçu pour réduire les forces d'amortissement des pistons, en particulier les frottements.

Cependant, cette réduction des forces d'amortissement rend le moteur sensible aux vibrations et aux chocs, lesquels peuvent provoquer des oscillations des pistons excessives produisant des chocs internes entre chaque piston et les parties fixes du moteur, ce qui diminue les performances et/ou la durée de vie du moteur. Or, dans le domaine des engins spatiaux, le lancement induit de nombreux chocs et vibrations.

EP1780440A1 décrit un moteur électrodynamique linéaire ayant deux pistons mobiles pour comprimer le fluide cryogénique. Le moteur est associé à un dispositif d'amortissement de vibrations ou de chocs exercés sur le moteur. Ce dispositif d'amortissement comprend des ressorts qui sont agencés pour amortir, de manière passive, les éventuels vibrations et chocs subis par le moteur.

Toutefois, de tels ressorts ne permettent pas d'amortir efficacement les vibrations et chocs de forte intensité, lesquels induisent des déplacements particulièrement grands. Or, de tels déplacements risquent de détériorer des composants montés de manière rigide, tels que des tuyaux de raccordement. En outre, l'ensemble de ces ressorts représente un encombrement important, ce qui est difficilement compatible avec certaines applications, comme les machines cryogéniques destinées à être embarquées dans des engins spatiaux.

La présente invention vise notamment à résoudre, en tout ou partie, les problèmes mentionnés ci-avant.

A cet effet, l'invention a pour objet un dispositif, pour amortir ou supprimer des efforts parasites, tels que des efforts produits par des vibrations ou des chocs générés par un moteur de type électrodynamique linéaire et comportant au moins un piston mobile en translation pour comprimer un fluide circulant dans un refroidisseur cryogénique, le dispositif comprenant au moins une vis d'interface dont une première portion terminale est destinée à être fixée au moteur et dont une deuxième portion terminale est destinée à être fixée à une embase.

Le dispositif se **caractérise en ce qu'**il comprend en outre :

- au moins un organe de mesure agencé pour mesurer un effort parasite exercé sur une vis d'interface respective et essentiellement suivant une direction longitudinale de ladite vis d'interface, le ou chaque organe de mesure étant adapté pour générer un premier signal représentatif d'un effort parasite ;
- au moins un actionneur agencé pour transmettre, à une vis d'interface respective, un effort essentiellement suivant la direction longitudinale et de sens opposé à l'effort parasite ; et
- une unité de commande adaptée pour recevoir le premier signal et pour émettre un deuxième signal à destination d'au moins un actionneur de sorte que l'actionneur génère ledit effort.

En d'autres termes, un dispositif conforme à l'invention comprend un capteur d'effort parasite et un actionneur transmettant un effort, ainsi qu'une unité de commande reliée en boucle au capteur et à l'actionneur de façon à piloter l'actionneur en fonction des signaux émis par le capteur.

Ainsi, un tel dispositif permet d'amortir efficacement les vibrations et chocs de forte intensité et notamment dans une plage de fréquence vibratoire étendue, en particulier entre 20 Hz et 200 Hz.

Dans la présente demande, le terme « effort » désigne une force ou un moment. Dans la présente demande, le terme « mesurer un effort » signifie mesurer une grandeur physique représentative de l'intensité de l'effort. Une telle grandeur physique peut être par exemple la longueur d'un déplacement de l'organe de mesure ou l'amplitude d'une déformation d'une partie de l'organe de mesure. Cette longueur ou cette amplitude peut être rapportée sur une durée pour calculer une accélération, puis un effort. Alternativement, une telle grandeur physique peut être par exemple la vitesse ou l'accélération de l'organe de mesure.

Selon un mode de réalisation, au moins une vis d'interface précontraint un actionneur respectif.

Ainsi, un tel montage permet de contraindre, sans le comprimer, l'actionneur à générer exclusivement une force qui tend à écarter les éléments serrés par la vis d'interface. La force générée par l'actionneur est dite « force bloquée », car elle produit une course nulle, en raison de la précontrainte. Un tel dispositif d'amortissement réagit très rapidement aux commandes de l'unité de commande.

Ainsi, chaque organe de mesure réalise des mesures précises des efforts parasites.

Selon un mode de réalisation, l'assemblage du dispositif est adapté pour précontraindre chaque organe de mesure.

Selon un mode de réalisation, au moins un organe de mesure présente un orifice, une vis d'interface traversant ledit orifice, l'organe de mesure ayant de préférence une forme d'anneau.

Ainsi, un tel organe de mesure permet de réaliser un dispositif compact.

Selon un mode de réalisation, au moins un organe de mesure comprend au moins une jauge de déformation réalisée en un matériau piézoélectrique ou en un matériau électriquement capacitif.

Ainsi, une telle jauge de déformation permet de mesurer un effort parasite de manière particulièrement rapide.

Selon un mode de réalisation, au moins un organe de mesure comprend plusieurs jauges de déformation électriquement reliées entre elles de façon à former un pont de Wheatstone.

Ainsi, un tel pont de Wheatstone permet de mesurer un effort parasite de manière particulièrement précise et répétable.

Selon un mode de réalisation, au moins un actionneur est adapté pour générer des efforts d'intensité variable, chaque effort étant d'intensité proportionnelle à un deuxième signal respectif.

Ainsi, un tel actionneur permet d'adapter l'effort à l'intensité des efforts parasites, pour le cas où l'intensité des vibrations évoluerait.

Selon un mode de réalisation, l'intensité d'un effort est équivalente à l'intensité de l'effort parasite correspondant.

Ainsi, un tel effort permet de supprimer, au niveau du moteur, la vibration ou le choc produisant l'effort parasite.

Selon un mode de réalisation, au moins un actionneur comporte un microsystème électromécanique, le microsystème électromécanique comprenant de préférence un matériau piézoélectrique.

Ainsi, un tel microsystème électromécanique présente une grande fiabilité, une longue durée de service et une durée de réaction particulièrement courte.

Selon un mode de réalisation, au moins un actionneur présente une extrémité libre reliée à une masselotte sismique suspendue en porte-à-faux à un organe de guidage de façon à générer un effort inertiel . Un tel actionneur est par exemple du type usuellement désigné par l'expression anglais « *proof mass* ».

Selon un mode de réalisation, le nombre de vis d'interface est égal au moins à deux, de préférence égal au moins à quatre, et dans lequel le dispositif comprend, pour chaque vis d'interface, un organe de mesure et un actionneur.

Ainsi, un tel dispositif permet de fixer le moteur de manière fiable et résistante aux vibrations et aux chocs externes. De plus, l'unité de commande peut piloter individuellement chaque actionneur en utilisant les premiers signaux de tous les organes de mesure, ce qui permet par exemple de générer un moment pour amortir ou supprimer un effort parasite « à distance », en pilotant un actionneur distant de l'organe de mesure où l'intensité de l'effort parasite est la plus grande.

Selon un mode de réalisation, le dispositif comprend en outre au moins un amortisseur passif, tel qu'un coussin métallique, disposé entre l'embase et un support de référence, l'amortisseur passif étant adapté pour amortir des efforts parasites produits avec une fréquence supérieure à 200 Hz, le ou chaque actionneur étant adapté pour amortir des efforts parasites produits avec une fréquence comprise entre 20 Hz et 200 Hz.

Ainsi, un tel amortisseur passif permet d'amortir des vibrations dont la fréquence est supérieure à celles que permet d'amortir le ou chaque actionneur.

De plus, la présente invention a pour objet un moteur de type électrodynamique linéaire comportant au moins un piston mobile en translation pour comprimer un fluide circulant dans un refroidisseur cryogénique. Le moteur se **caractérise en ce qu'**il comporte en outre un dispositif tel que précédemment exposé.

Ainsi, un tel moteur est ne transmet peu ou plus de vibrations ou de chocs aux composants qui l'environnent.

Selon un mode de réalisation, le moteur comprend un dispositif selon l'invention dans lequel le nombre de vis d'interface est égal à quatre, le dispositif comprenant, pour chaque vis d'interface, un organe de mesure et un actionneur, les quatre vis d'interface étant disposées respectivement à chaque sommet d'un rectangle, chaque actionneur étant agencé près d'une vis d'interface respective, la distance entre une vis d'interface respective et un actionneur respectif étant de préférence inférieure à la longueur de la vis d'interface.

Selon un mode de réalisation, le moteur comprend comprenant en outre un premier flasque et un deuxième flasque distincts, le premier flasque et le deuxième flasque étant globalement superposés, le premier flasque et le deuxième flasque étant percés de deux orifices respectifs et coïncidents, une vis d'interface respective traversant les deux orifices de sorte que le serrage de ladite vis d'interface presse le premier flasque contre le deuxième flasque, au moins un organe de mesure étant disposé contre une face du deuxième flasque destinée à être tournée vers l'embase, au moins un actionneur étant agencé pour transmettre un effort au premier flasque et au deuxième flasque de façon à éloigner le premier flasque du deuxième flasque.

Ainsi, de tels flasques permettent de monter la ou les vis d'interface. De plus, les flasques forment des surfaces d'appui où chaque actionneur peut exercer l'effort. Lorsque l'effort tend à éloigner le premier flasque du deuxième flasque, la ou chaque vis d'interface travaille en traction, si bien que le ou chaque organe de mesure est comprimé, ce qui augmente sa raideur et permet l'amortissement des efforts parasites.

Selon un mode de réalisation, au moins un actionneur est disposé dans une cavité ménagée près d'une vis d'interface respective et entre le premier flasque et le deuxième flasque.

Ainsi, une telle cavité permet de réaliser un moteur compact et de placer un actionneur au plus près de la vis d'interface, par laquelle passe les efforts parasites.

Par ailleurs, la présente invention a pour objet un procédé, pour amortir ou supprimer des efforts parasites, tels que des efforts produits par des vibrations ou des chocs. Le procédé se **caractérise en ce qu'**il met en oeuvre un moteur tel que précédemment exposé et en ce qu'il comprend les étapes :

- au moins un organe de mesure des efforts parasites ;
- l'organe de mesure respectif génère un premier signal représentatif d'un effort parasite ;
- l'unité de commande reçoit le premier signal ;
- l'unité de commande détermine l'intensité de l'effort parasite ;
- l'unité de commande émet le deuxième signal à destination d'un actionneur respectif de sorte qu'au moins un actionneur génère un effort;
- l'actionneur respectif transmet, à une première portion terminale respective et à une deuxième portion terminale respective, un effort généré.

Ainsi, un tel procédé permet d'amortir efficacement les vibrations et chocs de forte intensité et notamment dans une plage de fréquence vibratoire étendue, en particulier entre 20 Hz et 200 Hz.

Selon un mode de réalisation, l'unité de commande met en oeuvre, lorsque l'intensité des efforts parasites dépasse un seuil prédéterminé, un algorithme à commande prédictive avec filtrage adaptatif et optimisation de l'erreur quadratique moyenne, le filtrage étant de préférence à réponse impulsionnelle finie.

Ainsi, un tel algorithme permet de filtrer efficacement des efforts parasites produits par des sources vibratoires erratiques, c'est-à-dire des efforts parasites d'intensités très variables dans le temps.

La présente invention sera bien comprise et ses avantages ressortiront aussi à la lumière de la description qui va suivre, donnée uniquement à titre d'exemple non limitatif et faite en référence aux dessins annexés, dans lesquels :

- la figure 1 est une coupe schématique d'un moteur conforme à un premier mode de réalisation de l'invention et comprenant un dispositif conforme à un premier mode de réalisation de l'invention, avec des actionneurs du type à « force bloquée » ;
- la figure 2 est une vue schématique de côté, suivant la flèche II à la figure 1, du moteur de la figure 1 ;
- la figure 3 est une vue à plus grande échelle du détail III à la figure 2 ;
- la figure 4 est une vue similaire à la figure 3 d'un dispositif conforme à un deuxième mode de réalisation de l'invention ;
- la figure 5 est une vue schématique de dessous, suivant la flèche V à la figure 1, d'une partie du moteur de la figure 1 ;
- la figure 6 est une représentation schématique d'un procédé conforme à un premier mode de réalisation de l'invention ;
- la figure 7 est une représentation schématique d'un procédé conforme à un deuxième mode de réalisation de l'invention
- la figure 8 est une vue similaire à la figure 3 illustrant un dispositif conforme à un troisième mode de réalisation de l'invention, avec des actionneurs du type « *proof mass* » ;
- la figure 9 est une vue en perspective, avec transparence, d'un moteur conforme à un troisième mode de réalisation de l'invention et comprenant le dispositif de la figure 8, dans un premier état ;
- la figure 10 est une vue similaire à la figure 9 du moteur de la figure 9 dans un deuxième état ; et
- la figure 11 est une vue similaire à la figure 9 du moteur de la figure 9 dans un troisième état.

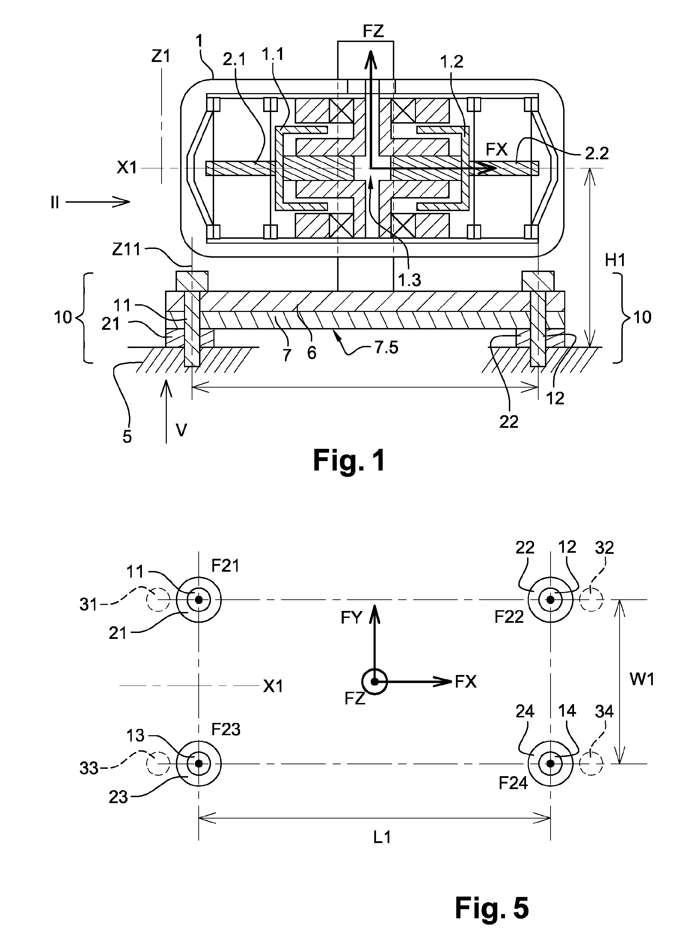

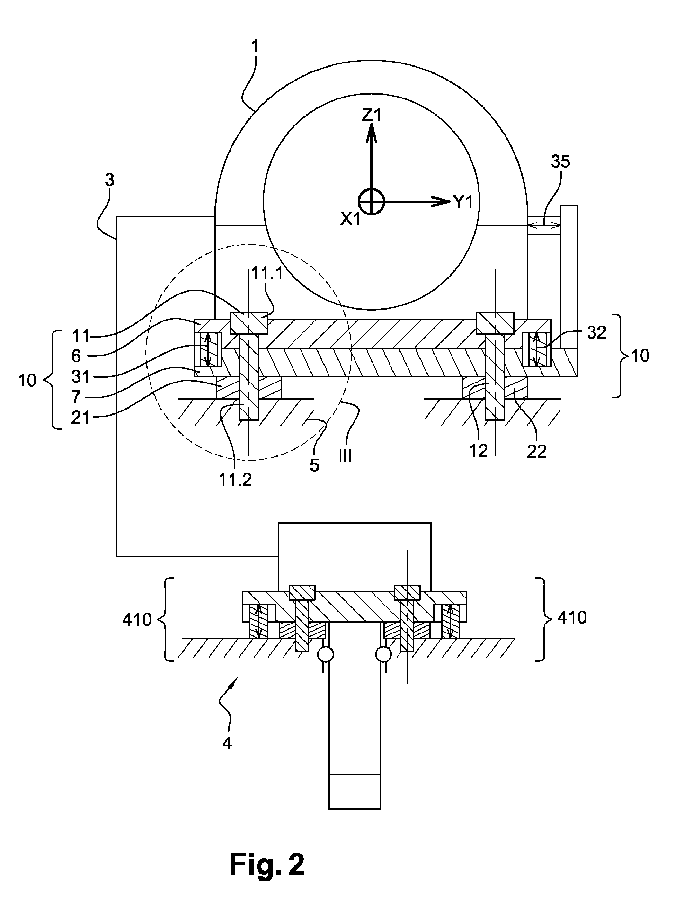

Les figures 1 et 2 illustrent un moteur 1 qui est du type électrodynamique linéaire à cycle de Stirling et qui peut être embarqué dans un engin spatial non représenté, tel qu'un satellite d'observation de la Terre. Le moteur 1 comporte deux pistons 2.1 et 2.2 qui sont mobiles en translation suivant une direction de translation X1, vers une chambre 1.3 dans laquelle se trouve du fluide de refroidissement à comprimer.

Comme le montre la figure 2, le moteur 1 est raccordé, par l'intermédiaire d'un conduit 3, à un détendeur 4, vers lequel le fluide de refroidissement circule. L'ensemble du moteur 1 et du détendeur 4 forme un refroidisseur cryogénique.

Pour déplacer chaque piston 2.1 ou 2.2 suivant la direction de translation X1, le moteur 4 comprend deux bobines d'induction 1.1 et 1.2 qui sont liées respectivement des pistons 2.1 et 2.2. Chaque bobine d'induction 1.1 et 1.2 est formée d'un enroulement de spires ayant la forme générale d'un cylindre d'axe X1. Dans la présente demande, le verbe « lier » et ses dérivés se rapportent à une liaison mécanique.

Les pistons 2.1 et 2.2 sont agencés de façon à se déplacer dans des sens respectifs opposés. En d'autres termes, lorsqu'ils sont en mouvement, les pistons 2.1 et 2.2 se rapprochent ou s'éloignent l'un de l'autre. Lorsque les pistons 2.1 et 2.2 sont le plus éloigné l'un de l'autre, des paliers de rappel élastique, tels que des membranes flexibles, rapprochent les pistons 2.1 et 2.2. Pour maximiser l'amplitude du déplacement de chaque piston 2.1 ou 2.2, donc pour maximiser la compression du fluide, le moteur 4 est piloté de sorte que les pistons 2.1 et 2.2 travaillent à ou près de leur fréquence de résonance mécanique.

Le moteur 1 comporte en outre un dispositif 10 pour amortir ou supprimer des efforts parasites, tels que des efforts produits par des vibrations ou des chocs. De tels efforts sont exercés sur le moteur 1 par des sources de vibrations externes, qui sont activées par exemple lors du lancement d'un satellite.

Le dispositif 10 comprend quatre vis d'interface 11, 12, 13 et 14, visibles à la figure 5. Les vis d'interface 11, 12, 13 et 14 sont dites « d'interface », car elles servent à fixer une partie du moteur 1, notamment son carter, à une embase 5 qui a notamment pour fonction de supporter cette partie du moteur 1. La partie inférieure du moteur 1 comprend en outre un premier flasque 6 et un deuxième flasque 7 distincts. Le premier flasque 6 et le deuxième flasque 7 sont formés par des plaques globalement superposées. En d'autres termes, le premier flasque 6 et le deuxième flasque 7 sont en appui l'un contre l'autre. Le premier flasque 6 et le deuxième flasque 7 sont en liaison appui plan.

Le premier flasque 6 et le deuxième flasque 7 sont solidaires du carter du moteur 1. Le second flasque 7 peut faire partie intégrante du carter (par exemple monobloc ou rapporté sur le carter), le premier flasque 6 peut être rapporté sur le second 7 flasque, de sorte que le carter est maintenu en sandwich par le premier flasque 6 qui est rapporté sur le carter du moteur 1 (cf. figure 2).

Dans la mesure où les vis d'interface 12, 13 et 14 sont semblables à la vis d'interface 11, la description de la vis d'interface 11, donnée ci-après en relation avec les figures 1 à 4, peut être transposée aux vis d'interface 12, 13 et 14.

La vis d'interface 11 s'étend suivant une direction longitudinale Z11 qui est transversale à la direction de translation X1. La vis d'interface 11 a une première portion terminale, en l'occurrence une tête 11.1, qui est fixée au moteur 1 et une deuxième portion terminale, en l'occurrence un filetage 11.2, qui est fixé à l'embase 5. Plus précisément, la tête 11.1 est en appui sur un chambrage réalisé dans le premier flasque 6.

Le premier flasque 6 et le deuxième flasque 7 sont percés de deux alésages ou orifices coïncidents, à travers lesquels passe la vis d'interface 11 de sorte que le serrage de la vis d'interface 11 dans l'embase 5 presse le premier flasque 6 contre le deuxième flasque 7.

Le dispositif 10 comprend en outre quatre organes de mesure ou capteurs 21, 22, 23 et 24. Dans la mesure où les capteurs 22, 23 et 24 sont semblables au capteur 21, la description du capteur 21, donnée ci-après en relation avec les figures 1 à 4, peut être transposée aux capteurs 22, 23 et 24.

Le capteur 21 est agencé pour mesurer un effort parasite F21 qui s'exerce sur la vis d'interface 11 et essentiellement suivant la direction longitudinale Z11. Le capteur 21 est adapté pour générer un premier signal représentatif de l'effort parasite F21, comme cela est détaillé ci-après. Les efforts parasites tels que F21 sont dus aux vibrations et chocs subis par le refroidisseur cryogénique. Les efforts parasites sont donc généralement de nature vibratoire.

Dans l'exemple des figures, le capteur 21 a une forme de rondelle ou d'anneau circulaire dont l'orifice est traversé par la vis d'interface 11. Le capteur 21 est disposé contre une face 7.5 du deuxième flasque 7 qui est destinée à être tournée vers l'embase 5. En d'autres termes, le capteur 21 est pris en sandwich entre le deuxième flasque 7 et l'embase 5.

De plus, le capteur 21 comprend une jauge de déformation réalisée en un matériau piézoélectrique. Dans ce cas, le premier signal représentatif correspond à une variation de résistance, donc à une variation de courant.

Le dispositif 10 comprend en outre quatre actionneurs 31, 32, 33 et 34, représentés en pointillés à la figure 5. Dans la mesure où les actionneurs 32, 33 et 34 sont semblables à l'actionneur 31, la description de l'actionneur 31, donnée ci-après en relation avec les figures 1 à 4, peut être transposée aux actionneurs 32, 33 et 34.

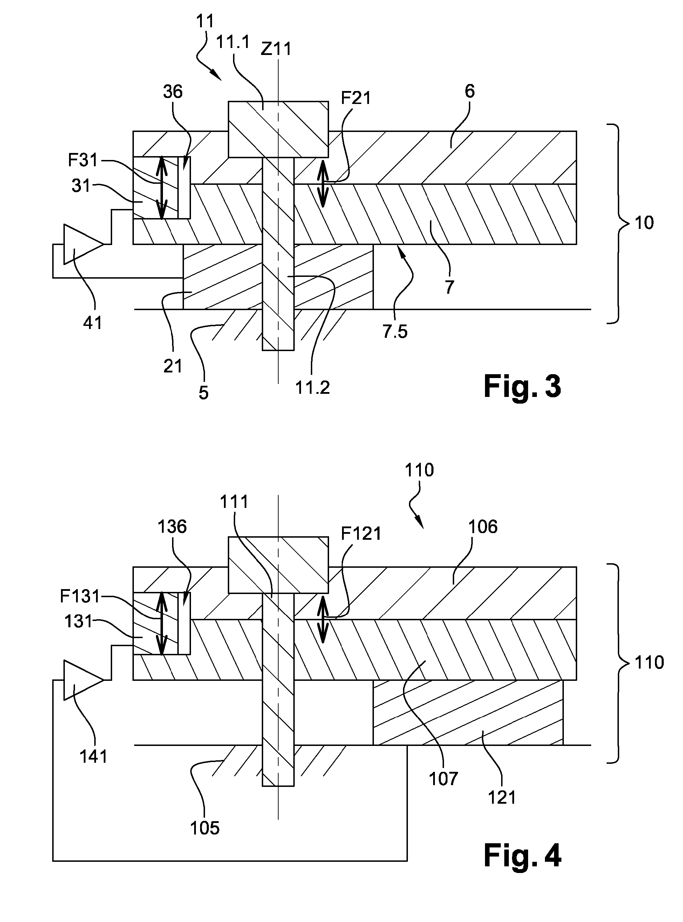

Comme le montrent les figures 2 et 3, l'actionneur 31 peut être disposé dans une cavité 36 ménagée près de la vis d'interface 11 et entre le premier flasque 6 et le deuxième flasque 7.

L'actionneur 31 est agencé pour transmettre, à la tête de vis 11.1 et au filetage 11.2, un effort d'amortissement F31 qui est porté essentiellement par la direction longitudinale Z11 et qui est de sens opposé à l'effort parasite F21. Dans l'exemple des figures, l'actionneur 31 est agencé pour transmettre l'effort d'amortissement F31 au premier flasque 6 et au deuxième flasque 7 de façon à éloigner le premier flasque 6 du deuxième flasque 7.

Pour chaque vis d'interface 11, 12, 13 ou 14, le dispositif 10 comprend un organe de mesure, respectivement 21, 22, 23, et 24, et un actionneur, respectivement 31, 32, 33 et 34.

Les quatre vis d'interface 11, 12, 13 ou 14 sont disposées respectivement à chaque sommet d'un rectangle.

Chaque actionneur 31, 32, 33 ou 34 est agencé près d'une vis d'interface respective 11, 12, 13 ou 14. Ainsi, chaque actionneur 31, 32, 33 ou 34, chaque vis d'interface respective 11, 12, 13 ou 14 et chaque capteur 21, 22, 23 ou 24 sont respectivement colocalisés.

De préférence, la distance entre une vis d'interface respective 11, 12, 13 ou 14 (ou un capteur respectif) et un actionneur respectif 31, 32, 33 ou 34 est inférieure à la longueur de la vis d'interface respective 11, 12, 13 ou 14.

Le dispositif 10 comprend en outre une unité de commande 41, visible à la figure 3, qui est adaptée pour recevoir le premier signal de l'un au moins des capteurs 21, 22, 23 et/ou 24. De plus, l'unité de commande 41 est adaptée pour émettre un deuxième signal à destination d'au moins l'un des actionneurs 31, 32, 33 et 34, par exemple l'actionneur 31, de sorte que ledit actionneur 31 génère un effort d'amortissement F31.

L'unité de commande 41 détermine par calcul l'intensité de chaque effort d'amortissement à générer de façon à amortir les efforts parasites et supprimer ainsi leur transmission aux divers composants du refroidisseur cryogénique. Les bases d'un tel calcul sont exemplifiées ci-après en relation avec la figure 5.

L'unité de commande 41 est reliée à chaque capteur 21, 22, 23 ou 24 et à chaque actionneur 31, 32, 33 ou 34. Dans la présente demande, les verbes « relier », « connecter » et leurs dérivés se rapportent à une liaison électrique ou électromagnétique réalisée par l'intermédiaire d'un ou de plusieurs composants électriques ou électromagnétiques. Une telle liaison permet de transmettre des courants électriques ou des signaux électromagnétiques.

L'actionneur 31 comporte un microsystème électromécanique qui comprend un matériau piézoélectrique. L'actionneur 31 est adapté pour générer des efforts d'amortissement F31 d'intensité variable et proportionnelle à un deuxième signal respectif.

En d'autres termes, l'unité de commande 41 applique à l'actionneur 31, en tant que deuxième signal, une tension qui est fonction du premier signal, lequel est représentatif de l'intensité de l'effort parasite F21. Dans l'exemple des figures, l'intensité d'un effort d'amortissement F31 est équivalente à l'intensité de l'effort parasite F21 correspondant.

Le capteur 21 est agencé pour mesurer, en tant qu'effort parasite F21, la force de traction qui s'exerce sur la vis d'interface 11. L'actionneur 31 est agencé pour générer, en tant qu'effort d'amortissement F31, une force longitudinale sur la vis d'interface 11. L'assemblage du dispositif 10 est réalisé de sorte que la vis d'interface 11 précontraint l'actionneur 31.

En d'autres termes, l'effort parasite F21 exerce une traction ou une compression sur la vis d'interface 11 et l'effort d'amortissement F31 exerce en réaction une compression ou une traction sur la vis d'interface 11.

Comme le montre la figure 5, l'unité de commande 41 reçoit une mesure d'un effort parasite F21, F22, F23 ou F24 respectivement pour chaque vis d'interface 11, 12, 13 ou 14. Puis, l'unité de commande 41 calcule les résultantes FX, FY et FZ, par transposition des moments que les efforts parasites produisent au centre de la chambre 1.3, comme suit :

$$(1) \quad FZ = F21+F22+F23+F24$$

$$(2) \quad FX = (L1/2H1).(F21+F22-F23-F24)$$

$$(3) \quad FY = (W1/2H1).(F23+F24-F21-F22)$$

où :

- FX est la résultante suivant la direction de translation X1 ;
- FY est la résultante suivant une direction Y1, perpendiculaire à la direction de translation X1 et à la direction transversale Z11 ;
- FZ est la résultante suivant une direction Z1, perpendiculaire à la direction de translation X1 et parallèle à la direction transversale Z11 ;
- L1 est la longueur, mesurée suivant la direction de translation X1, qui sépare deux vis d'interface 11 et 12 ;
- H1 est la hauteur entre l'embase 5 et la chambre 1.3 ; et
- W1 est la largeur, mesurée suivant la direction Y1, qui sépare deux vis d'interface 11 et 12.

L'unité de commande 41 calcule ainsi chaque effort d'amortissement F31 et équivalents à générer par chaque actionneur respectif 31, 32, 33 ou 34, de façon à amortir ou supprimer la transmission des efforts parasites F21, F22, F23 et F24 dans le moteur 1 ou dans le détendeur 4.

Comme le montre la figure 2, le détendeur 4 peut comprendre également un dispositif 410 pour amortir ou supprimer les vibrations et chocs. La structure et le fonctionnement du dispositif 410 sont semblables à ceux du dispositif 10. De plus, le dispositif 10 peut comporter un actionneur 35 agencé entre le deuxième flasque 7 et le carter du moteur 1 de façon à amortir des efforts parasites exercés essentiellement parallèlement à la direction Y1. L'actionneur 35 est semblable aux actionneurs 31 à 34.

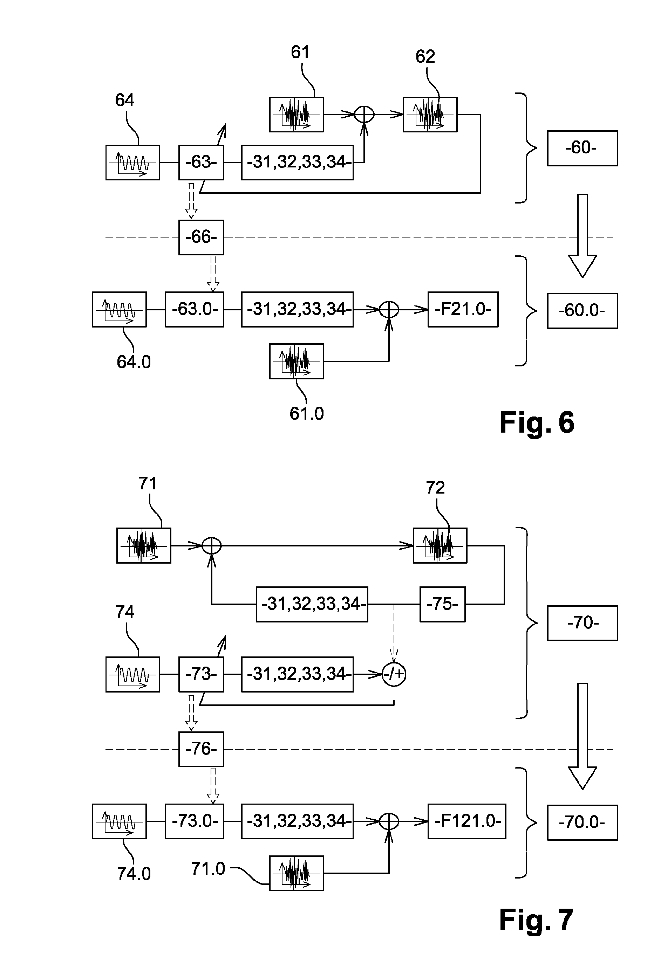

La figure 6 illustre un procédé conforme à la présente invention, pour amortir ou supprimer des efforts parasites tels que F21. Ce procédé met en oeuvre le moteur 1 et il comprend les étapes suivantes :

- Au moins l'un des capteurs 21, 22, 23 ou 24, par exemple le capteur 21, mesure un effort parasite, par exemple l'effort parasite F21.
- Le capteur 21 génère un premier signal représentatif de l'effort parasite F21.
- L'unité de commande 41 reçoit ce premier signal.
- L'unité de commande 41 détermine l'intensité de l'effort parasite F21, et les résultantes pour le moteur 1, par exemple suivant le calcul établi ci-avant en relation avec la figure 5.
- L'unité de commande 41 émet le deuxième signal à destination d'au moins un actionneur respectif, par exemple l'actionneur 31, de sorte qu'il génère un effort d'amortissement F31.
- L'actionneur 31 transmet, à la tête de vis 11.1 et au filetage 11.2 l'effort d'amortissement F31.

Dans l'exemple de la figure 6, l'unité de commande 41 met en oeuvre un algorithme de type proportionnel intégrateur dérivateur.

Dans un mode nominal 60, cet algorithme traite une source de vibrations 61.

Dans une étape 62, les capteurs 21, 22, 23 et 24 mesurent des efforts parasites F21, F22, F23 et F24, qui correspondent à l'amplitude des vibrations.

Les premiers signaux de mesures sont reçus par l'unité de commande 41, laquelle met en oeuvre un filtre adaptatif 63 de type à réponse impulsionnelle finie.

Le filtre adaptatif 63 utilise les tensions de commande 64 des bobines 1.1 et 1.2 pour définir les deuxièmes signaux, lesquels sont amplifiés par chaque actionneur 31, 32, 33 ou 34, ce qui permet d'amortir ou supprimer les efforts parasites F21, F22, F23 et F24.

L'un des avantages du mode nominal 60 de cet algorithme est qu'il n'opère pas de manière continue, mais seulement lorsque l'intensité des efforts parasites (vibrations et chocs subis par le moteur 1) dépasse un seuil prédéterminé.

Dans un mode dégradé 60.0, lorsque les capteurs 21, 22, 23 et 24 ne mesurent pas les efforts parasites, l'algorithme traite une source de vibrations 61.0.

L'unité de commande 41 met en oeuvre un filtre 63.0 à réponse impulsionnelle finie. Les coefficients 66 appliqués par le filtre 63.0 sont optimisés lorsque le dispositif 10 travaille en mode nominal 60.

Le filtre 63.0 utilise les tensions de commande 64.0 des bobines 1.1 et 1.2 pour définir les deuxièmes signaux, lesquels sont amplifiés par chaque actionneur 31, 32, 33 ou 34.

Dans le mode dégradé 60.0, il reste parfois un ou des effort(s) parasite(s) résiduel(s) F21.0 qui sont transmis aux composants du refroidisseur cryogénique, dont le moteur 1.

La figure 4 illustre un dispositif 110 semblable au dispositif 10. La description du dispositif 10 donnée ci-avant en relation avec les figures 1, 2, 3 et 5 peut être transposée au dispositif 110, à l'exception des différences énoncées ci-après.

Un élément du dispositif 110 semblable ou correspondant à un élément du dispositif 10 porte la même référence numérique augmentée de 100. On définit ainsi une embase 105, un premier flasque 106, un deuxième flasque 107, une vis d'interface 111, un capteur 121, un effort parasite F121, un actionneur 131, un effort d'amortissement F131 et une cavité 136.

Le dispositif 110 diffère du dispositif 10, car le capteur 121 a la forme d'un disque plein, au lieu d'une rondelle ou d'un anneau circulaire. De plus, le capteur 121 est monté à côté de la vis d'interface 111, laquelle ne traverse donc pas le capteur 121.

En outre, le dispositif 110 diffère du dispositif 10, car le dispositif 110 est piloté selon un algorithme à retour de commande en temps réel, tel qu'illustré à la figure 7, de type proportionnel intégrateur dérivateur.

Dans un mode nominal 70, cet algorithme traite une source de vibrations 71.

Dans une étape 72, les capteurs 121 et équivalents mesurent des efforts parasites F121 et équivalents, qui correspondent à l'amplitude des vibrations.

Les premiers signaux de mesures sont reçus par l'unité de commande 41, laquelle met en oeuvre un filtre adaptatif 73 de type à réponse impulsionnelle finie.

Le filtre adaptatif 73 utilise les tensions de commande 74 des bobines 1.1 et 1.2 pour définir les deuxièmes signaux, lesquels sont amplifiés par chaque actionneur 31, 32, 33 ou 34, ce qui permet d'amortir ou supprimer les efforts parasites F121 et équivalents.

Dans un mode dégradé 70.0, lorsque les capteurs 121 et équivalents ne mesurent pas les efforts parasites, l'algorithme traite une source de vibrations 71.0.

L'unité de commande 41 met en oeuvre un filtre 73.0 à réponse impulsionnelle finie. Les coefficients 76 appliqués par le filtre 73.0 sont optimisés lorsque le dispositif 110 travaille en mode nominal 70.

Le filtre 73.0 utilise les tensions de commande 74.0 des bobines 1.1 et 1.2 pour définir les deuxièmes signaux, lesquels sont amplifiés par chaque actionneur 31, 32, 33 ou 34.

Dans le mode dégradé 70.0, il reste parfois un ou des effort(s) parasite(s) résiduel(s) F121.0 qui sont transmis aux composants du refroidisseur cryogénique.

Le dispositif peut comprendre en outre des amortisseurs passifs non représentés, tel que des coussins métalliques, montés précontraints entre l'embase 5 et un support de référence non représenté. Ces amortisseurs passifs sont adaptés pour amortir des efforts parasites produits avec une fréquence supérieure à 200 Hz. Ces amortisseurs passifs secondent ainsi les actionneurs 31, 32, 33 et 34, lesquels sont plutôt adaptés pour amortir des efforts parasites F21, F22, F23 et F24 dont la vibration a une fréquence comprise entre 20 Hz et 200 Hz.

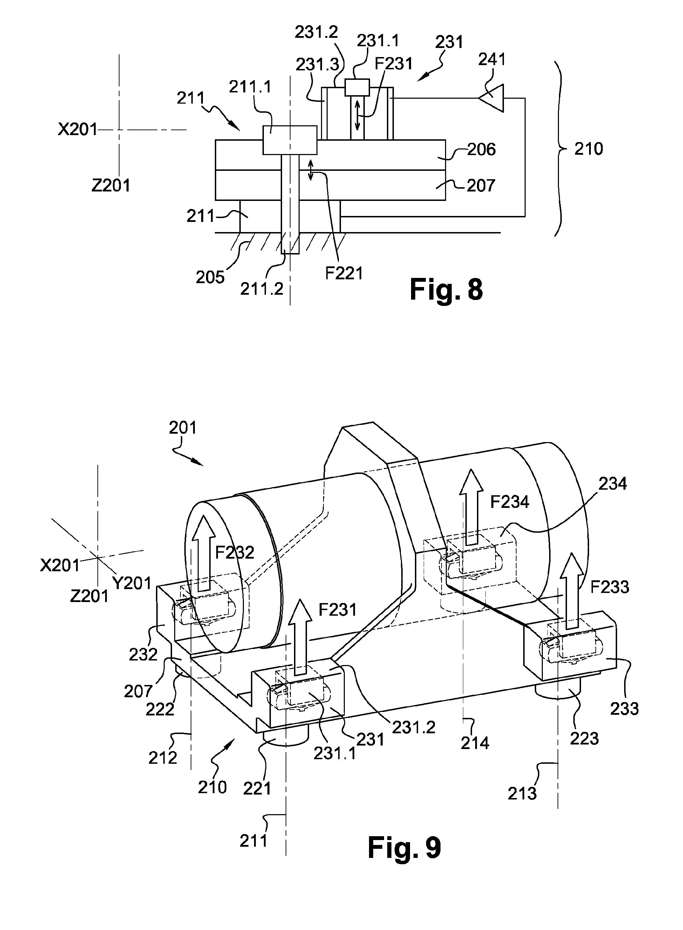

Les figures 8, 9, 10 et 11 illustrent un dispositif 210 et un moteur 201 respectivement semblables au dispositif 10 et au moteur 1. La description du dispositif 10 et du moteur 1 donnée ci-avant en relation avec les figures 1, 2, 3 et 5 peut être transposée au dispositif 210 et au moteur 201, à l'exception des différences notables énoncées ci-après.

Un élément du dispositif 210 ou du moteur 201 semblable ou correspondant à un élément du dispositif 10 ou du moteur 1 porte la même référence numérique augmentée de 200. On définit ainsi une embase 205, un premier flasque 206, un deuxième flasque 207, quatre vis d'interface 211, 212, 213 et 214 symbolisées par leurs axes respectifs à la figure 9, quatre capteur 221, 222, 223 et 224, une première portion terminale ou une tête 211.1, une deuxième portion terminale ou filetage 211.2, un effort parasite F221, un actionneur 231 qui génère un effort inertiel F231, ainsi qu'une unité de commande 241.

Les pistons non représentés du moteur 201 se déplacent suivant une direction de translation X201 et les axes longitudinaux des vis d'interface 211, 212, 213 et 214 sont parallèles à une direction transversale Z201. Lorsque l'embase 205 est horizontale, la direction transversale Z201 est verticale.

Comme le montre la figure 8, le dispositif 210 diffère du dispositif 10, car chaque actionneur 231, 232, 233 ou 234 présente une extrémité libre reliée à une masselotte sismique 231.1 et équivalentes qui est suspendue en porte-à-faux à un organe de guidage 231.2 et équivalents, de façon à générer l'effort inertiel F231, F232, F233 ou F234, lequel contribue à l'amortissement. Dans l'exemple des figures 8 à 11, l'organe de guidage 231.2 ou équivalents est parallèle à l'axe longitudinal de la vis d'interface 211 et équivalentes. Un tel actionneur est parfois désigné par l'expression anglaise « *proof-mass* ».

Comme le montre la figure 9, comme pour le moteur 1 et le dispositif 10, les quatre vis d'interface 211, 212, 213 ou 214 sont disposées respectivement à chaque sommet d'un rectangle. Chaque actionneur 231, 232, 233 ou 234 est agencé près d'une vis d'interface respective 211, 212, 213 ou 214.

Mais, comme le montre la figure 8, chaque actionneur 231, 232, 233 ou 234 est placé sur le premier flasque 206, à la différence du dispositif 210 dans lequel l'actionneur est disposé dans une cavité ménagée entre le premier flasque et le deuxième flasque.

Comme le montrent les figures 9 à 11, la masselotte sismique 231.1 et équivalentes a globalement la forme d'un prisme dont la base est un rectangle ouvert sur un côté. L'actionneur 231 et équivalent comporte un boîtier 231.3 entourant la masselotte sismique 231.1 et la tige de guidage 231.2.

Ainsi, chaque actionneur 231, 232, 233 ou 234, chaque vis d'interface 211, 212, 213 ou 214 et chaque capteur 221, 222, 223 ou 224 sont respectivement colocalisés.

De préférence, la distance entre une vis d'interface respective 211, 212, 213 ou 214 (ou un capteur respectif) et un actionneur respectif 231, 232, 233 ou 234 est inférieure à la longueur de la vis d'interface respective 211, 212, 213 ou 214.

En réalisant un procédé conforme à l'invention :

- Comme le montre la figure 9, dans un premier état, l'unité de commande 241 pilote les quatre actionneurs 231, 232, 233 et 234 de manière synchronisée, de sorte que le dispositif 210 amortit des forces parasites qui s'exercent suivant la direction transversale Z201.

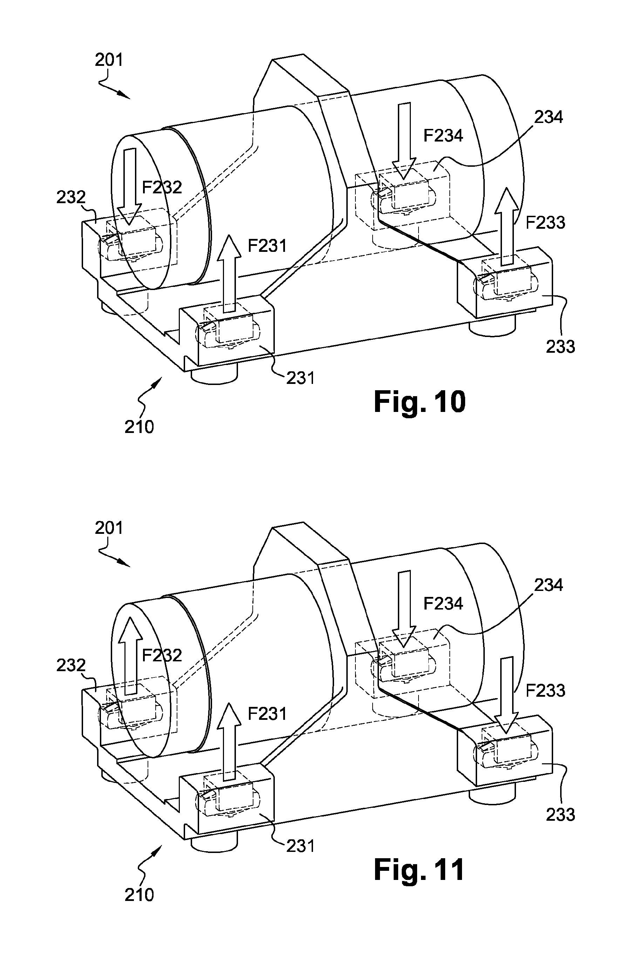

- Comme le montre la figure 10, dans un deuxième état, l'unité de commande 241 pilote les deux actionneurs 231 et 233 en opposition de phase aux deux actionneurs 232 et 234, de sorte que le dispositif 210 amortit des moments parasites qui s'exercent autour de la direction de translation X201.Comme le montre la figure 10, dans un deuxième état, l'unité de commande 241 pilote les deux actionneurs 231 et 232 en opposition de phase aux deux actionneurs 233 et 234, de sorte que le dispositif 210 amortit des moments parasites qui s'exercent autour d'une direction Y201, qui est matérialisée à la figure 9 et qui est perpendiculaire à la direction de translation X201 et à la direction transversale Z201.

Dans chacun des premier, deuxième et troisième états, les intensités appropriées des forces d'amortissement F231, F232, F233 et F234 peuvent être déterminées suivant la méthode décrite ci-avant en relation avec la figure 5.

Dans un mode de réalisation particulièrement avantageux un moteur comprend quatre vis d'interface associées chacune avec un actionneur respectif générant un effort de type inertiel décrit ci-dessus (« proof mass »). Comme représenté à la figure 2, le moteur est associé à un détendeur comprenant deux vis d'interface associées chacune également à un actionneur respectif générant un effort de type inertiel. Le moteur et de préférence également le détendeur sont en outre pourvus d'au moins un amortisseur passif, tel qu'un coussin métallique, adapté pour amortir des efforts parasites produits avec une fréquence supérieure à 200 Hz. Les actionneurs sont adaptés pour amortir des efforts parasites produits avec une fréquence comprise entre 20 Hz et 200 Hz.

Selon d'autres caractéristiques avantageuses mais facultatives, prises isolément ou selon toute combinaison techniquement admissible :

- Au moins un organe de mesure comprend plusieurs jauges de déformation électriquement reliées entre elles de façon à former un pont de Wheatstone.

- Au moins un organe de mesure comprend au moins une jauge de déformation réalisée en un matériau électriquement capacitif.

## Revendications

1. Dispositif (10 ; 110 ; 210), pour amortir ou supprimer des efforts parasites (F21, F22, F23, F24 ; F121 ; F221), tels que des efforts produits par des vibrations ou des chocs générés par un détendeur, un pulse tube ou moteur (1 ; 301) de type électrodynamique linéaire et comportant au moins un piston mobile (2.1, 2.2) en translation pour comprimer un fluide circulant dans un refroidisseur cryogénique, le dispositif (10 ; 110 ; 210) comprenant au moins une vis d'interface (11, 12, 13, 14 ; 111 ; 211, 212, 213, 214) dont une première portion terminale (11.1 ; 211.1) est destinée à être fixée au moteur (1 ; 201) et dont une deuxième portion terminale (11.2 ; 211.2) est destinée à être fixée à une embase (5 ; 105 ; 205), le dispositif (10 ; 110 ; 210) étant **caractérisé en ce qu'**il comprend en outre :

   - au moins un organe de mesure (21, 22, 23, 24 ; 121 ; 221, 222, 223, 224) agencé pour mesurer un effort parasite (F21, F22, F23, F24 ; F121 ; F221) exercé sur une vis d'interface respective (11, 12, 13, 14 ; 111 ; 211, 212, 213, 214) et essentiellement suivant une direction longitudinale de ladite vis d'interface (11, 12, 13, 14 ; 111 ; 211, 212, 213, 214), le ou chaque organe de mesure (21, 22, 23, 24 ; 121 ; 211, 212, 213, 214) étant adapté pour générer un premier signal représentatif d'un effort parasite (F21, F22, F23, F24 ; F121 ; F221) ;
   - au moins un actionneur (31, 32, 33, 34 ; 131 ; 231, 232, 233, 234) agencé pour transmettre, à une vis d'interface respective (11, 12, 13, 14 ; 111 ; 211, 212, 213, 214), un effort (F31 ; F131) essentiellement suivant la direction longitudinale et de sens opposé à l'effort parasite (F21, F22, F23, F24 ; F121 ; F221) ; et
   - une unité de commande (41 ; 141 ; 241) adaptée pour recevoir le premier signal et pour émettre un deuxième signal à destination d'au moins un actionneur (31, 32, 33, 34 ; 131 ; 231, 232, 233, 234) de sorte que l'actionneur (31, 32, 33, 34 ; 131) génère ledit effort (F31 ; F131).

2. Dispositif (10 ; 110) selon la revendication 1, dans lequel au moins une vis d'interface (11, 12, 13, 14 ; 111) précontraint un actionneur respectif (31, 32, 33, 34 ; 131).

3. Dispositif (10 ; 110; 210) selon l'une des revendications précédentes, dans lequel au moins un organe de mesure (21, 22, 23, 24 ; 121 ; 221, 222, 223, 224) présente un orifice, une vis d'interface (11, 12, 13, 14 ; 111 ; 211, 212, 213, 214) traversant ledit orifice, l'organe de mesure (21, 22, 23, 24 ; 121 ; 221, 222, 223, 224) ayant de préférence une forme d'anneau.

4. Dispositif (10 ; 110; 210) selon l'une des revendications précédentes, dans lequel au moins un organe de mesure (21, 22, 23, 24 ; 121 ; 221, 222, 223, 224) comprend au moins une jauge de déformation réalisée en un matériau piézoélectrique ou en un matériau électriquement capacitif.

5. Dispositif selon la revendication 4, dans lequel au moins un organe de mesure comprend plusieurs jauges de déformation électriquement reliées entre elles de façon à former un pont de Wheatstone.

6. Dispositif (10 ; 110; 210) selon l'une des revendications précédentes, dans lequel au moins un actionneur (31, 32, 33, 34 ; 131 ; 231, 232, 233, 234) est adapté pour générer des efforts (F31 ; F131) d'intensité variable, chaque effort (F31 ; F131) étant d'intensité proportionnelle à un deuxième signal respectif.

7. Dispositif (10 ; 110 ; 210) selon la revendication 6, dans lequel l'intensité d'un effort (F31 ; F131) est équivalente à l'intensité de l'effort parasite (F21, F22, F23, F24 ; F121 ; F221) correspondant.

8. Dispositif (10 ; 110; 210) selon l'une des revendications précédentes, dans lequel au moins un actionneur (31, 32, 33, 34 ; 131 ; 231, 232, 233, 234) comporte un microsystème électromécanique, le microsystème électromécanique comprenant de préférence un matériau piézoélectrique pour générer un effort de type à force bloquée (« blocked force » avec un déplacement nul de la pièce sur laquelle est généré l'effort.

9. Dispositif (210) selon la revendication 8, dans lequel au moins un actionneur (231, 232, 233, 234) présente une extrémité libre reliée à comprenant une masselotte sismique (231.1) suspendue en porte-à-faux à un organe de guidage (231.2) de façon à générer un effort inertiel (F231, F232, F233, F234).

10. Dispositif (10 ; 110; 210) selon l'une des revendications précédentes, dans lequel le nombre de vis d'interface (11, 12, 13, 14 ; 111 ; 211, 212, 213, 214) est égal au moins à deux, de préférence égal au moins à quatre, et dans lequel le dispositif (10 ; 110 ; 210) comprend, pour chaque vis d'interface (11, 12, 13, 14 ; 111 ; 211, 212, 213, 214), un organe de mesure (21, 22, 23, 24 ; 121 ; 221, 222, 223, 224) et un actionneur (31, 32, 33, 34 ; 131 ; 231, 232, 233, 234).

11. Dispositif selon l'une des revendications précédentes, comprenant en outre au moins un amortisseur passif, tel qu'un coussin métallique, disposé entre l'embase et un support de référence, l'amortisseur passif étant adapté pour amortir des efforts parasites produits avec une fréquence supérieure à 200 Hz, le ou chaque actionneur étant adapté pour amortir des efforts parasites produits avec une fréquence comprise entre 20 Hz et 200 Hz.

12. Détendeur de refroidisseur cryogénique, notamment à Tube Pulsé ou Stirling (4), **caractérisé en ce qu'**il comporte un dispositif (10 ; 110 ; 210) selon l'une des revendications précédentes.

13. Moteur (1 ; 201) de type électrodynamique linéaire notamment pour système de compression de réfrigérateur ou un moteur de type à tube pulsé ou stirling comportant au moins un piston mobile (2.1, 2.2) en translation pour comprimer un fluide circulant dans un refroidisseur cryogénique, le moteur (1 ; 201) étant **caractérisé en ce qu'**il comporte en outre un dispositif (10 ; 110 ; 210) selon l'une des revendications 1 à 11.

14. Moteur (1 ; 201) selon la revendication 13, comprenant un dispositif (10 ; 110 ; 210) selon la revendication 10 dans lequel le nombre de vis d'interface (11, 12, 13, 14 ; 111 ; 211, 212, 213, 214) est égal à quatre, les quatre vis d'interface (11, 12, 13, 14 ; 111 ; 211, 212, 213, 214) étant disposées respectivement à chaque sommet d'un rectangle, chaque actionneur (31, 32, 33, 34 ; 131 ; 231, 232, 233, 234) étant agencé près d'une vis d'interface respective (11, 12, 13, 14 ; 111 ; 211, 212, 213, 214), la distance entre une vis d'interface respective (11, 12, 13, 14 ; 111 ; 211, 212, 213, 214) et un actionneur respectif (31, 32, 33, 34 ; 131 ; 231, 232, 233, 234) étant de préférence inférieure à la longueur de la vis d'interface (11, 12, 13, 14 ; 111 ; 211, 212, 213, 214).

15. Moteur (1) selon l'une des revendications 13 ou 14, comprenant en outre un premier flasque (6 ; 106) et un deuxième flasque (7 ; 107) distincts, le premier flasque (6 ; 106) et le deuxième flasque (7 ; 107) étant globalement superposés, le premier flasque (6 ; 106) et le deuxième flasque (7 ; 107) étant percés de deux orifices respectifs et coïncidents, une vis d'interface respective (11, 12, 13, 14 ; 111) traversant les deux orifices de sorte que le serrage de ladite vis d'interface (11, 12, 13, 14 ; 111) presse le premier flasque (6 ; 106) contre le deuxième flasque (7 ; 107), au moins un organe de mesure (21, 22, 23, 24 ; 121) étant disposé contre une face (7.5) du deuxième flasque (7 ; 107) destinée à être tournée vers l'embase (5 ; 105), au moins un actionneur (31, 32, 33, 34 ; 131) étant agencé pour transmettre un effort (F31 ; F131) au premier flasque (6 ; 106) et au deuxième flasque (7 ; 107) de façon à éloigner le premier flasque (6 ; 106) du deuxième flasque (7 ; 107).

16. Moteur (1) selon la revendication 15, dans lequel au moins un actionneur (31, 32, 33, 34 ; 131) est disposé dans une cavité (36 ; 136) ménagée près d'une vis d'interface (11, 12, 13, 14 ; 111) respective et entre le premier flasque (6 ; 106) et le deuxième flasque (7 ; 107).

17. Procédé, pour amortir ou supprimer des efforts parasites (F21, F22, F23, F24 ; F121 ; F221), tels que des efforts produits par des vibrations ou des chocs, le procédé étant **caractérisé en ce qu'**il met en oeuvre un détendeur selon la revendication 12 ou un moteur (1 ; 201) selon l'une des revendications 13 à 16 et **en ce qu'**il comprend les étapes :

- au moins un organe de mesure (21, 22, 23, 24 ; 121 ; 221, 222, 223, 224) mesure des efforts parasites (F21, F22, F23, F24 ; F121 ; F221) ;
- l'organe de mesure (21, 22, 23, 24 ; 121 ; 221, 222, 223, 224) respectif génère un premier signal représentatif d'un effort parasite (F21, F22, F23, F24 ; F121 ; F221) ;
- l'unité de commande (41 ; 141 ; 241) reçoit le premier signal ;
- l'unité de commande (41 ; 141 ; 241) détermine l'intensité de l'effort parasite (F21, F22, F23, F24 ; F121 ; F221) ;
- l'unité de commande (41 ; 141 ; 241) émet le deuxième signal à destination d'un actionneur (31, 32, 33, 34 ; 131 ; 231, 232, 233, 234) respectif de sorte qu'au moins un actionneur (31, 32, 33, 34 ; 131 ; 231, 232, 233, 234) génère un effort (F31 ; F131) ;
- l'actionneur (31, 32, 33, 34 ; 131) respectif transmet, à une première portion terminale (11.1 ; 211.1) respective et à une deuxième portion terminale (11.2 ; 211.2) respective, un effort généré (F31 ; F131).

**18.** Procédé selon la revendication 17, dans lequel l'unité de commande (41 ; 141 ; 241) met en oeuvre, lorsque l'intensité des efforts parasites (F21, F22, F23, F24 ; F121 ; F221) dépasse un seuil prédéterminé, un algorithme à commande prédictive avec filtrage adaptatif (63 ; 73) et optimisation de l'erreur quadratique moyenne, le filtrage étant de préférence à réponse impulsionnelle finie.

**Revendications modifiées conformément à la règle 137(2) CBE.**

**1.** Moteur (1 ; 201) de type électrodynamique linéaire notamment pour système de compression de réfrigérateur ou un moteur de type à tube pulsé ou Stirling comportant au moins un piston mobile (2.1, 2.2) en translation pour comprimer un fluide circulant dans un refroidisseur cryogénique, le moteur (1 ; 201) étant **caractérisé en ce qu'**il comporte en outre un dispositif (10 ; 110 ; 210), pour amortir ou supprimer des efforts parasites (F21, F22, F23, F24 ; F121 ; F221), tels que des efforts produits par des vibrations ou des chocs générés, le dispositif (10 ; 110 ; 210) comprenant au moins une vis d'interface (11, 12, 13, 14 ; 111 ; 211, 212, 213, 214) dont une première portion terminale (11.1 ; 211.1) est destinée à être fixée au moteur (1 ; 201) et dont une deuxième portion terminale (11.2 ; 211.2) est destinée à être fixée à une embase (5 ; 105 ; 205), le dispositif (10 ; 110 ; 210) étant **caractérisé en ce qu'**il comprend en outre :

- au moins un organe de mesure (21, 22, 23, 24 ; 121 ; 221, 222, 223, 224) agencé pour mesurer un effort parasite (F21, F22, F23, F24 ; F121 ; F221) exercé sur une vis d'interface respective (11, 12, 13, 14 ; 111 ; 211, 212, 213, 214) et essentiellement suivant une direction longitudinale de ladite vis d'interface (11, 12, 13, 14 ; 111 ; 211, 212, 213, 214), le ou chaque organe de mesure (21, 22, 23, 24 ; 121 ; 211, 212, 213, 214) étant adapté pour générer un premier signal représentatif d'un effort parasite (F21, F22, F23, F24 ; F121 ; F221) ;
- au moins un actionneur (31, 32, 33, 34 ; 131 ; 231, 232, 233, 234) agencé pour transmettre, à une vis d'interface respective (11, 12, 13, 14 ; 111 ; 211, 212, 213, 214), un effort (F31 ; F131) essentiellement suivant la direction longitudinale et de sens opposé à l'effort parasite (F21, F22, F23, F24 ; F121 ; F221) ; et
- une unité de commande (41 ; 141 ; 241) adaptée pour recevoir le premier signal et pour émettre un deuxième signal à destination d'au moins un actionneur (31, 32, 33, 34 ; 131 ; 231, 232, 233, 234) de sorte que l'actionneur (31, 32, 33, 34 ; 131) génère ledit effort (F31 ; F131).

**2.** Moteur (10 ; 110) selon la revendication 1, dans lequel au moins une vis d'interface (11, 12, 13, 14 ; 111) précontraint un actionneur respectif (31, 32, 33, 34 ; 131).

**3.** Moteur (10 ; 110 ; 210) selon l'une des revendications précédentes, dans lequel au moins un organe de mesure (21, 22, 23, 24 ; 121 ; 221, 222, 223, 224) présente un orifice, une vis d'interface (11, 12, 13, 14 ; 111 ; 211, 212, 213, 214) traversant ledit orifice, l'organe de mesure (21, 22, 23, 24 ; 121 ; 221, 222, 223, 224) ayant de préférence une forme d'anneau.

**4.** Moteur (10 ; 110 ; 210) selon l'une des revendications précédentes, dans lequel au moins un organe de mesure (21, 22, 23, 24 ; 121 ; 221, 222, 223, 224) comprend au moins une jauge de déformation réalisée en un matériau piézoélectrique ou en un matériau électriquement capacitif.

**5.** Moteur selon la revendication 4, dans lequel au moins un organe de mesure comprend plusieurs jauges de déformation électriquement reliées entre elles de façon à former un pont de Wheatstone.

**6.** Moteur (10 ; 110 ; 210) selon l'une des revendications précédentes, dans lequel au moins un actionneur (31, 32, 33, 34 ; 131 ; 231, 232, 233, 234) est adapté pour générer des efforts (F31 ; F131) d'intensité variable, chaque effort (F31 ; F131) étant d'intensité proportionnelle à un deuxième signal respectif.

**7.** Moteur (10 ; 110 ; 210) selon la revendication 6, dans lequel l'intensité d'un effort (F31 ; F131) est équivalente à l'intensité de l'effort parasite (F21, F22, F23, F24 ; F121 ; F221) correspondant.

**8.** Moteur (10 ; 110 ; 210) selon l'une des revendications précédentes, dans lequel au moins un actionneur (31, 32, 33, 34 ; 131 ; 231, 232, 233, 234) comporte un microsystème électromécanique, le microsystème électromécanique comprenant de préférence un matériau piézoélectrique pour générer un effort de type à force bloquée (<< blocked force >> avec un déplacement nul de la pièce sur laquelle est généré l'effort.

**9.** Moteur (210) selon la revendication 8, dans lequel au moins un actionneur (231, 232, 233, 234) présente une extrémité libre reliée à comprenant une masselotte sismique (231.1) suspendue en porte-à-faux à un organe de guidage (231.2) de façon à générer un effort inertiel (F231, F232, F233, F234).

**10.** Moteur (10 ; 110 ; 210) selon l'une des revendications précédentes, dans lequel le nombre de vis d'interface (11, 12, 13, 14 ; 111 ; 211, 212, 213, 214) est égal au moins à deux, de préférence égal au moins à quatre, et dans lequel le dispositif (10 ; 110 ; 210) comprend, pour chaque vis d'interface (11, 12, 13, 14 ; 111 ; 211, 212, 213, 214), un organe de mesure (21, 22, 23, 24 ; 121 ; 221, 222, 223, 224) et un actionneur (31, 32, 33, 34 ; 131 ; 231, 232, 233, 234).

**11.** Moteur selon l'une des revendications précédentes, comprenant en outre au moins un amortisseur passif, tel qu'un coussin métallique, disposé entre l'embase et un support de référence, l'amortisseur passif étant adapté pour amortir des efforts parasites produits avec une fréquence supérieure à 200 Hz, le ou chaque actionneur étant adapté pour amortir des efforts parasites produits avec une fréquence comprise entre 20 Hz et 200 Hz.

**12.** Moteur (1 ; 201) selon l'une quelconque des revendications 1 à 11, comprenant un dispositif (10 ; 110 ; 210) selon la revendication 10 dans lequel le nombre de vis d'interface (11, 12, 13, 14 ; 111 ; 211, 212, 213, 214) est égal à quatre, les quatre vis d'interface (11, 12, 13, 14 ; 111 ; 211, 212, 213, 214) étant disposées respectivement à chaque sommet d'un rectangle, chaque actionneur (31, 32, 33, 34 ; 131 ; 231, 232, 233, 234) étant agencé près d'une vis d'interface respective (11, 12, 13, 14 ; 111 ; 211, 212, 213, 214), la distance entre une vis d'interface respective (11, 12, 13, 14 ; 111 ; 211, 212, 213, 214) et un actionneur respectif (31, 32, 33, 34 ; 131 ; 231, 232, 233, 234) étant de préférence inférieure à la longueur de la vis d'interface (11, 12, 13, 14 ; 111 ; 211, 212, 213, 214).

**13.** Moteur (1) selon l'une des revendications 1 à 12, comprenant en outre un premier flasque (6 ; 106) et un deuxième flasque (7 ; 107) distincts, le premier flasque (6 ; 106) et le deuxième flasque (7 ; 107) étant globalement superposés, le premier flasque (6 ; 106) et le deuxième flasque (7 ; 107) étant percés de deux orifices respectifs et coïncidents, une vis d'interface respective (11, 12, 13, 14 ; 111) traversant les deux orifices de sorte que le serrage de ladite vis d'interface (11, 12, 13, 14 ; 111) presse le premier flasque (6 ; 106) contre le deuxième flasque (7 ; 107), au moins un organe de mesure (21, 22, 23, 24 ; 121) étant disposé contre une face (7.5) du deuxième flasque (7 ; 107) destinée à être tournée vers l'embase (5 ; 105), au moins un actionneur (31, 32, 33, 34 ; 131) étant agencé pour transmettre un effort (F31 ; F131) au premier flasque (6 ; 106) et au deuxième flasque (7 ; 107) de façon à éloigner le premier flasque (6 ; 106) du deuxième flasque (7 ; 107).

**14.** Moteur (1) selon la revendication 13, dans lequel au moins un actionneur (31, 32, 33, 34 ; 131) est disposé dans une cavité (36 ; 136) ménagée près d'une vis d'interface (11, 12, 13, 14 ; 111) respective et entre le premier flasque (6 ; 106) et le deuxième flasque (7 ; 107).

**15.** Procédé, pour amortir ou supprimer des efforts parasites (F21, F22, F23, F24 ; F121 ; F221), tels que des efforts produits par des vibrations ou des chocs, le procédé étant **caractérisé en ce qu'**il met en oeuvre un détendeur notamment à tube pulsé ou Stirling ou un moteur (1 ; 201) selon l'une des revendications 1 à 14 et **en ce qu'**il comprend les étapes :

> - au moins un organe de mesure (21, 22, 23, 24 ; 121 ; 221, 222, 223, 224) mesure des efforts parasites (F21, F22, F23, F24 ; F121 ; F221);
> - l'organe de mesure (21, 22, 23, 24 ; 121 ; 221, 222, 223, 224) respectif génère un premier signal représentatif d'un effort parasite (F21, F22, F23, F24 ; F121 ; F221) ;

- l'unité de commande (41 ; 141 ; 241) reçoit le premier signal ;
- l'unité de commande (41 ; 141 ; 241) détermine l'intensité de l'effort parasite (F21, F22, F23, F24 ; F121 ; F221) ;
- l'unité de commande (41 ; 141 ; 241) émet le deuxième signal à destination d'un actionneur (31, 32, 33, 34 ; 131 ; 231, 232, 233, 234) respectif de sorte qu'au moins un actionneur (31, 32, 33, 34 ; 131 ; 231, 232, 233, 234) génère un effort (F31 ; F131) ;
- l'actionneur (31, 32, 33, 34 ; 131) respectif transmet, à une première portion terminale (11.1 ; 211.1) respective et à une deuxième portion terminale (11.2 ; 211.2) respective, un effort généré (F31 ; F131).

**16.** Procédé selon la revendication 15, dans lequel l'unité de commande (41 ; 141 ; 241) met en oeuvre, lorsque l'intensité des efforts parasites (F21, F22, F23, F24 ; F121 ; F221) dépasse un seuil prédéterminé, un algorithme à commande prédictive avec filtrage adaptatif (63 ; 73) et optimisation de l'erreur quadratique moyenne, le filtrage étant de préférence à réponse impulsionnelle finie.

**Fig. 1**

**Fig. 5**

**Fig. 2**

Fig. 3

Fig. 4

**Fig. 6**

**Fig. 7**

**Fig. 8**

**Fig. 9**

**Fig. 10**

**Fig. 11**

**EP 2 520 825 A1**

Europäisches Patentamt
European Patent Office
Office européen des brevets

**RAPPORT DE RECHERCHE EUROPEENNE**

Numéro de la demande
EP 12 16 4609

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 103 33 356 A1 (BENTELER AUTOMOBILTECHNIK GMBH [DE]) 24 février 2005 (2005-02-24) | 1,2,4-8 | INV. F16F15/00 |
| Y | * figure 1 * | 3,9, 11-13,17 | |
| X | US 5 738 343 A (NAKAJIMA ZENJI [JP] ET AL) 14 avril 1998 (1998-04-14) * figure 2 * | 1,10 | |
| Y | JP 5 149378 A (HONDA MOTOR CO LTD) 15 juin 1993 (1993-06-15) * figure * | 3 | |
| Y | EP 1 528 281 A1 (DEUTSCH ZENTR LUFT & RAUMFAHRT [DE]) 4 mai 2005 (2005-05-04) * figure 1 * | 9 | |
| Y | FR 2 695 696 A1 (VIBRACHOC SA [FR]) 18 mars 1994 (1994-03-18) * page 1, ligne 23 - ligne 29 * | 11 | DOMAINES TECHNIQUES RECHERCHES (IPC) |
| Y | US 2007/256428 A1 (UNGER REUVEN Z [US] ET AL) 8 novembre 2007 (2007-11-08) * le document en entier * | 12,13,17 | F16F |

Le présent rapport a été établi pour toutes les revendications

| Lieu de la recherche | Date d'achèvement de la recherche | Examinateur |
|---|---|---|
| La Haye | 30 mai 2012 | Beaumont, Arnaud |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

20

**ANNEXE AU RAPPORT DE RECHERCHE EUROPEENNE
RELATIF A LA DEMANDE DE BREVET EUROPEEN NO.**

EP 12 16 4609

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-05-2012

| Document brevet cité au rapport de recherche | Date de publication | Membre(s) de la famille de brevet(s) | Date de publication |
|---|---|---|---|
| DE 10333356 A1 | 24-02-2005 | AUCUN | |
| US 5738343 A | 14-04-1998 | AUCUN | |
| JP 5149378 A | 15-06-1993 | AUCUN | |
| EP 1528281 A1 | 04-05-2005 | AT 404804 T<br>DE 10351243 A1<br>DK 1528281 T3<br>EP 1528281 A1 | 15-08-2008<br>09-06-2005<br>01-12-2008<br>04-05-2005 |
| FR 2695696 A1 | 18-03-1994 | AUCUN | |
| US 2007256428 A1 | 08-11-2007 | AU 2007248879 A1<br>CA 2650092 A1<br>CN 101438077 A<br>EP 2016304 A1<br>JP 2009536514 A<br>KR 20090010103 A<br>US 2007256428 A1<br>WO 2007130202 A1 | 15-11-2007<br>15-11-2007<br>20-05-2009<br>21-01-2009<br>08-10-2009<br>28-01-2009<br>08-11-2007<br>15-11-2007 |

EPO FORM P0460

Pour tout renseignement concernant cette annexe : voir Journal Officiel de l'Office européen des brevets, No.12/82

**EP 2 520 825 A1**